Europäisches Patentamt

European Patent Office

Office européen des brevets

(19)

(11) Numéro de publication: **0 265 302 B1**

(12) **FASCICULE DE BREVET EUROPEEN**

(45) Date de publication de fascicule du brevet: **20.05.92** (51) Int. Cl.⁵: **H04N 5/335**, H04N 3/15

(21) Numéro de dépôt: **87402056.3**

(22) Date de dépôt: **15.09.87**

(54) **Système de prise de vues en vidéographie rapide utilisant un capteur optique matriciel à transfert de charges.**

(30) Priorité: **19.09.86 FR 8613181**

(43) Date de publication de la demande:
**27.04.88 Bulletin 88/17**

(45) Mention de la délivrance du brevet:
**20.05.92 Bulletin 92/21**

(84) Etats contractants désignés:
**DE GB**

(56) Documents cités:
**FR-A- 2 566 219**

**SPIE, High Speed Photography and Photonics (Strasbourg 1984, vol. 491, 1984, pages 716-722, Washington, US; G. BOUCHARLAT: "High-speed pickup of transient images"**

**JOURNAL OF APPLIED PHOTOGRAPHIC ENGINEERING, vol. 9, no. 6, décembre 1983, pages 199-204, Society of Photographic Scientists and Engineers, Easton, Pennsylvania, US; CHORNG-GANG SHAW: "Digital angiography: the apparatus, technique, and applications"**

**PATENT ABSTRACTS OF JAPAN, vol. 6, no. 238 (E-144)[1116], 26 novembre 1982; & JP-A-57 136 872 (MATSUSHITA DENKI SANGYO K.K.) 24-08-1982**

(73) Titulaire: **THOMSON-CSF**
**51, Esplanade du Général de Gaulle**
**F-92800 Puteaux(FR)**

(72) Inventeur: **Imhoff, Claude**
**THOMSON-CSF SCPI - 19, avenue de Messine**
**F-75008 Paris(FR)**
Inventeur: **Boue, Philippe**
**THOMSON-CSF SCPI - 19, avenue de Messine**
**F-75008 Paris(FR)**

(74) Mandataire: **Turlèque, Clotilde et al**
**THOMSON-CSF SCPI**
**F-92045 PARIS LA DEFENSE CEDEX 67(FR)**

# Description

La présente invention concerne un système de prise de vues en vidéographie rapide utilisant un capteur optique matriciel en circuit solide réalisé avec un dispositif à transfert de charges. De manière plus précise, l'invention porte essentiellement sur des moyens de lecture rapide permettant de faire varier la cadence image en influant sur le paramètre "format", ou sur le paramètre "résolution".

La vidéographie rapide est une technique récente qui permet de recueillir des images nettes d'un mouvement trop rapide pour être visible à l'oeil nu. Les images sont visionnées en temps quasi réel et les mesures les concernant sont exploitables en temps légèrement différé sur le site même d'expérimentation, ce qui est impossible à réaliser avec la cinématographie rapide qui était auparavant la seule technique utilisée pour voir l'invisible temporel.

Par rapport à la vidéographie classique, la vidéo rapide se distingue principalement par quatre paramètres : la cadence image qui est très nettement supérieure à 50 images/s ; le temps de pose ou durée d'exposition d'un point de l'image à la lumière qui est très nettement inférieur à 20 ms ; le nombre faible d'informations élémentaires ou pels, formant une image et qui caractérise sa qualité ; enfin, le débit d'information compris entre 3 à 50 MHz qui correspond à la bande passante du système instrumental et détermine ses limites d'emploi.

Les techniques de vidéographie rapide, sont actuellement principalement utilisées pour analyser en temps réel des mécanismes de machines et pour l'observation de projectiles ou de vecteurs divers sur les centres d'essai.

Un équipement d'observation en vidéo rapide comprend essentiellement deux parties. Une première partie qui fonctionne en temps réel avec une bande passante importante et qui assure les fonctions d'acquisition, de transmission et de stockage, ce dernier en général par enregistrement sur un support magnétique ; une seconde partie correspondant à l'exploitation et qui assure la lecture et la visualisation. Cette seconde partie fonctionne en temps légèrement différé et à bande passante légèrement réduite. L'ensemble peut être complété pour une observation quantitative par un dispositif d'exploitation manuel ou automatique des informations.

La partie exploitation fait appel, compte tenu de ses caractéristiques modérées, à des techniques parfaitement connues et maitrisées. L'objet de l'invention ne se rapporte pas à ce domaine mais à la première partie qui constitue la plus importante et qui révèle la majorité des problèmes techniques rencontrés pour la mise en point des systèmes de vidéographie rapide. Cette première partie utilise généralement une ou deux caméras synchrones munies de viseurs électroniques pour la mise au point, d'un dispositif de transmission à distance des informations fournies par les caméras, et d'un organe de stockage magnétique (magnétoscope analogique ou enregistreur magnétique-numérique).

Les caméras utilisées pour la vidéo rapide disponibles actuellement sont équipées soit avec un tube image du type Plumbicon ou Vidicon; à l'oxyde de plomb ou au silicum, soit avec un capteur matriciel réalisé avec un dispositif à transfert de charges dit DTC.

Les équipements à tube ont des vitesses limitées généralement a 200 images/s environ à plein format. La durée d'exposition est déterminée par un obturateur mécanique composé couramment d'un disque tournant muni d'une fente. La Vitesse de rotation est prédéterminée et généralement constante ; pour modifier la durée d'ouverture il faut donc changer le disque. Le rapport entre la durée d'exposition et la périodicité de l'ouverture est fixe par construction pour un disque donné et indépendant de la vitesse. Les solutions à tube présentent des caractéristiques électroniques ou optiques médiocres par rapport au capteur solide, en particulier une faible dynamique d'éclairement inférieure généralement à 500 et une sensibilité moyenne.

Certaines techniques à capteurs solides permettent d'atteindre jusqu'à 1600 images/s par lecture d'un format réduit, de l'ordre du 1/16 du plein format image, ceci au détriment de la résolution. Le format réduit est rectangulaire, situé dans un angle de la matrice s'étendant sur une fraction de la longueur de ligne. Une autre solution connue à capteur matriciel solide permet d'obtenir une cadence image plein format réglable et pouvant atteindre 2000 images/s ; cette solution n'utilise pas un capteur conventionnel, la vitesse est atteinte grâce à 32 sorties parallèles pour l'envoi simultané des données vers un enregistreur magnétique.

Par ailleurs, il est connu d'explorer une fenêtre déterminée de la zone image d'un dispositif à transfert de charge afin de diminuer le retard pur inhérent entre l'acquisition d'une image et son traitement, procédé qui est décrit dans la demande de brevet FR-A-2.566.219.

Le but de l'invention est de réaliser une caméra de prise de vues en vidéo rapide permettant de remédier aux inconvénients et limitations précités en utilisant un capteur matriciel DTC de type conventionnel, et pouvant atteindre une cadence image très élevée avec possibilité du réglage de la cadence, du format ou de la résolution, tout en restant du même ordre de grandeur de prix que les équipements à tubes.

Suivant l'invention, il est proposé de réaliser un système de prise de vues en vidéographie rapide comprenant une caméra équipée d'un dispositif obturateur commandé périodiquement à l'ouverture et d'un capteur matriciel solide composé d'une matrice de N lignes et M colonnes, et de moyens de lecture de cette matrice commandée par un séquenceur programmable, le système étant caractérisé en ce que le dispositif obturateur comporte un obturateur à commande électrique et des moyens de commande de l'obturateur permettant de faire varier d'une part, la durée d'ouverture (TP), c'est-à-dire le temps de pose et, d'autre part, la période d'obturation (TR), c'est-à-dire la cadence image, ces deux paramètres pouvant varier indépendamment l'un de l'autre et en ce qu'il comporte un sélecteur de mode, un sélecteur de format et un sélecteur de résolution connectés au séquenceur, le sélecteur de mode fournissant au séquenceur un mode de fonctionnement parmi au moins deux modes, un premier mode à format réglable et résolution constante dans lequel le sélecteur de format fournit au séquenceur un nombre entier K, le séquenceur commandant alors la lecture de N/K lignes de la matrice et un deuxième mode à format constant et résolution réglable dans lequel le sélecteur de résolution fournit au séquenceur un nombre entier K, le séquenceur commandant alors la lecture groupée de K lignes successives, l'un et l'autre des deux modes permettant de diviser le temps de lecture de la matrice par K et d'augmenter la cadence image (TR) d'un facteur au plus égal à K. De manière préférée, le dispositif obturateur est constitué par un intensificateur d'image du type à gain réglable pour ajuster le gain de la caméra en fonction de l'éclairement de la scène observée. Le capteur DTC peut être d'un type quelconque, soit un capteur conventionnel à transfert de trame, soit un capteur d'un type particulier, par exemple, à interligne ou monocoup.

Un troisième mode de fonctionnement peut être utilisé, dérivé du premier mode. Il consiste à réduire la zone utile à un format rectangulaire réduit qui ne fait pas toute la largeur de l'image et qui n occupe par exemple que la moitié d'une ligne. Ce format réduit peut être obtenu en cachant la partie restante de la matrice qui constitue les zones inutiles au moyen d'un cache adapté interposé sur le trajet optique. Les zones correspondantes de la matrice étant protégées par le cache fournissent un signal de lecture pratiquement nul. La lecture peut ainsi être limitée pratiquement aux fractions de lignes constituant le format réduit rectangulaire.

Les particularités et avantages de l'invention apparaîtront dans la description qui suit donnée à titre d'exemple, et à l'aide des figures annexées qui représentent :

- Figure 1, un bloc diagramme d'un système de prise de vues en vidéographie rapide conforme à l'invention ;
- Figures 2A à 2C, des schémas illustrant le mode 1 de lecture du capteur DTC ;
- Figures 3A et 3B, des schémas illustrant une variante du mode 1 de fonctionnement précédent ;
- Fig.4A, un chronogramme des principaux signaux de commande et du signal vidéo selon le procécé de lecture rapide utilisé ;
- Figs.4B, un chronogramme des principaux signaux de commande et du signal vidéo selon le procédé de lecture rapide utilisé en mode 1 en intégrant plusieurs lignes à la fois ;
- Fig.5A à 5J, des schémas relatifs au mode 2 de lecture du capteur de lecture DTC ;
- Fig.6, un schéma des moyens de commande opérationnels et du séquenceur programmé qui commande la lecture du capteur.

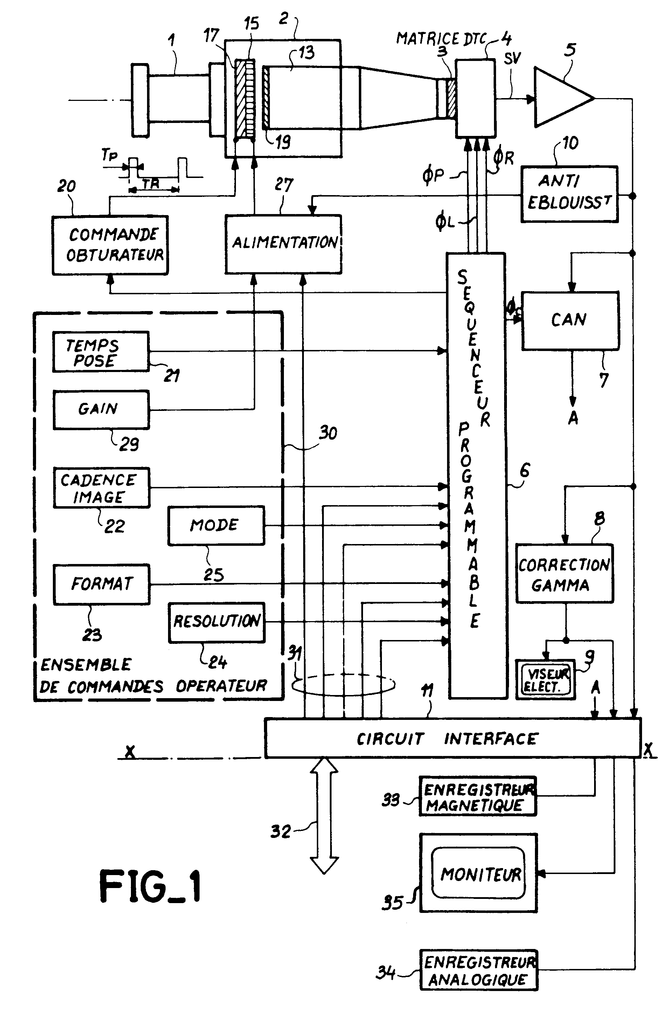

En se reportant à la figure 1 le système comporte une caméra située à la partie supérieure de la ligne XX, la partie située au-dessous de cette ligne correspondant à l'enregistrement ou la visualisation. La caméra est constituée d'un partie opto-électrique détectrice et d'un certain nombre de circuits associés. La partie opto-électrique se décompose en un objectif 1 suivi d'un dispositif obturateur 2, du capteur composé de la matrice DTC 3 et des circuits de lecture 4, et de l'amplificateur vidéo 5. La caméra est équipée avec des circuits conventionnels qui comportent un circuit 6 générateur des signaux (phases de commande $\phi$P, $\phi$L, $\phi$R, de lecture de la matrice), un convertisseur analogique-numérique 7, un circuit de correction de gamma 8, un viseur électronique 9, un circuit anti éblouissement 10, et un circuit interface 11. Le générateur 6 est réalisé sous forme d'un séquenceur programmé ; il délivre également la phase de commande $\phi$C du convertisseur analogique-numérique 7.

Conformément à l'invention, le système comporte un dispositif obturateur comprenant l'obturateur 2 proprement dit, du type à commande électrique, et des moyens de commande. Ces moyens de commande comportent un circuit de commande 20 qui élabore un signal analogique de commande appliqué à l'obturateur 2 ; ce signal comporte des impulsions périodiques de durée TP répétées périodiquement à la période TR. La durée TP correspond à la durée d'ouverture périodique et la durée TR à la périodicité de cette ouverture. Selon l'invention ses paramètres sont réglables séparément et de manière indépendante l'une de l'autre. Pour ce faire, les moyens de commande d'obturation comportent un réglage 21 du temps de pose TP à la disposition de l'opérateur. Ce réglage du temps de pose est appliqué au séquenceur lequel reçoit par ailleurs l'information TR de périodicité d'obturation d'un organe de réglage 22 de la cadence image. Le séquenceur 6 élabore, à partir des informations temps de pose et cadence image la donnée numérique correspondante qui est traduite en signal analogique de commande par le circuit 20. Le temps de pose est réglé par l'opérateur qui observe le viseur électronique 9, en fonction de la vitesse présentée par le sujet à filmer, de manière à éviter un effet de filé dans l'image. La cadence d'image TR est choisie elle, par l'opérateur, en fonction de la vitesse d'evolution du phénomème observé. Cette cadence d'image correspondant à la cadence maximale pouvant être sélectionnée par le séquenceur ce qui n'interdit pas la lecture, comme on le verra ultérieurement, à un cadence plus faible.

Complémentairement au réglage d'obturation précité et pour permettre la lecture correspondante du capteur à vitesse rapide, d'autres réglages opérationnels 23 et 24 sont prévus relatifs respectivement au format et à la résolution de l'image. Ces deux réglages correspondent à deux modes de fonctionnement envisagés, un premier mode à format variable et résolution constante suivant lequel le format utile à lire peut être réduit et le résolution est maximale et constante correspondant à un pixel de la matrice.

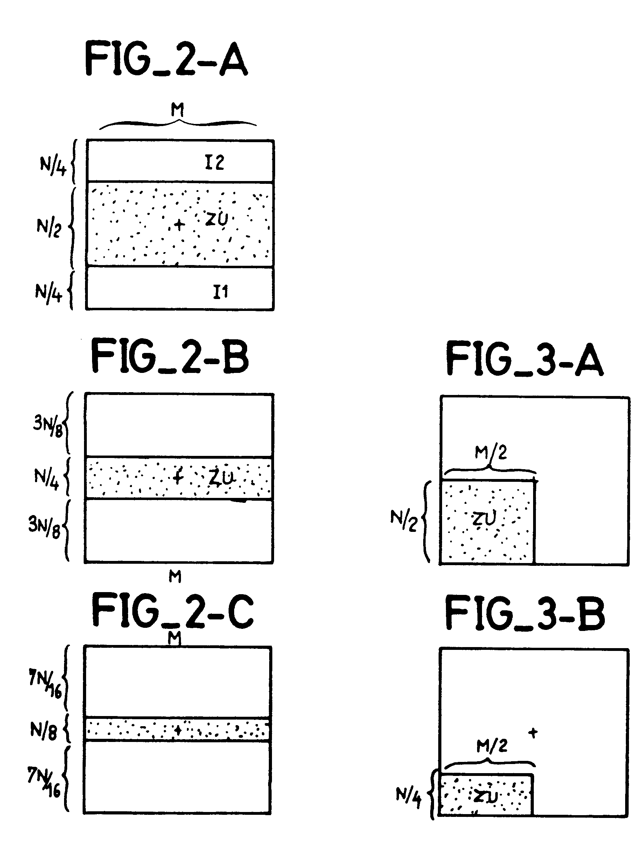

Suivant ce premier mode, comme représenté sur les figures 2A ou 2B ou 2C correspondant à trop exemples, la zone utile est centrée sur la matrice et comporte un nombre de lignes inférieur au nombre total de lignes de la matrice laissant en haut et en bas deux zones inutiles 11 et 12. La lecture de la matrice est organisée de manière à éliminer pratiquement le temps de lecture de ces zones 11 et 12 que l'on ne désire pas exploiter tandis que la zone restante utile ZU est lue point par point. Si l'on appelle M le nombre de points par ligne et N le nombre total de lignes de l'image, la zone utile ZU comporte un nombre N/K de lignes et consécutivement le temps de lecture va pouvoir être divisé par le facteur K par rapport à la lecture conventionnelle des N.M points du format global de l'image.

Suivant une deuxième mode de fonctionnement, la résolution est rendue variable et le format est maximal, constant, correspondant au format global. En prenant une résolution égale à K points s'étendant verticalement sur K lignes successives, et en effectuant des transferts groupés correspondants lors de la lecture, on obtient de même une durée de lecture qui est réduite dans le rapport K et donc une cadence qui peut être multipliée par ce même facteur.

Pour sélectionner le mode 1 ou 2 de fonctionnement, un cinquième réglage 25 est prévu.

L'obturateur électronique 2 est constitué de préférence au moyen d'un intensificateur d'image et avantageusement, d'un intensificateur d'image du type dit troisième génération qui comporte une galette de microcanaux 15 associée à une photocathode en arséniure de galium 17, la sortie des microcanaux étant reçue sur un écran 19 suivi d'une fibre optique 13. On bénéficie dans ce montage de la multiplication électronique dans la galette de micro-canaux 15. Ce tube intensificateur d'images peut être du type, TH 9478 fabriqué par Thomson-CSF. Le circuit 27 représenté correspond à l'alimentation du tube. La tension d'alimentation fournie peut être modifiée au moyen de la commande de gain 29 à la disposition de l'opérateur. Cette commande permet de modifier le gain optique de l'ensemble 1 et 2 en fonction de l'éclairement de la scène, et également en fonction du choix de la durée d'ouverture qui a été fait par l'opérateur. Par exemple, si la durée d'ouverture a été choisie très brève pour un phénomène rapide à analyser, il peut être intéressant d'accroître le gain du tube intensificateur pour obtenir un éclairement suffisant et une image nette. L'ensemble des commandes operationnelles a été représenté dans un bloc 30. Toutes ces commandes peuvent être fournies à distance, l'ensemble des liaisons 31 correspond à la réception des signaux correspondants provenant de l'extérieur par une liaison bus 32 à travers les circuits d'interface 11.

La partie extérieure à la caméra représentée comporte des enregistreurs magnétique 33 ou analogique 34 et un dispositif de visualisation 35.

Le premier mode de fonctionnement consiste à sélectionner le format utile qui représente une fraction de l'image totale, cette zone utile couvrant toute la largeur de l'image mais ayant une hauteur réduite. La figure 2A représente une zone utile ZU de hauteur moitié, soit N/2 lignes N étant le nombre total de lignes. Dans le cas de la figure 2B la zone utile comporte le quart des lignes et dans le cas de 2C le huitième du nombre total de lignes. Le choix du format utile dépend de la dimension présentéedans l'image, notamment dans le sens de la hauteur, par le sujet observe. Le rapport N/K de lignes sélectionné pour la zone utile ZU autorise inversement une multiplication de la cadence par un coefficient au plus égal à K. Par exemple, dans le cas de la figure 2B la cadence de lecture de l'image peut être sensiblement quatre fois plus rapide que celle du format global qui comporte N.M points, étant donné que le temps de lecture des zones d'extrémité ou intervalles inutiles I1 et I2 peut être très faible et négligeable.

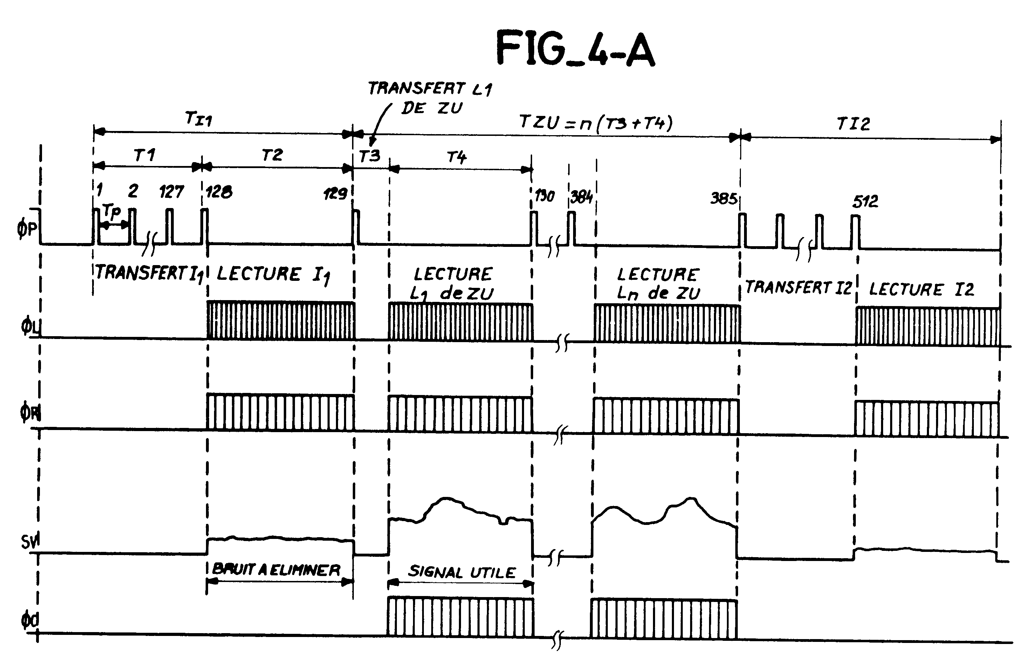

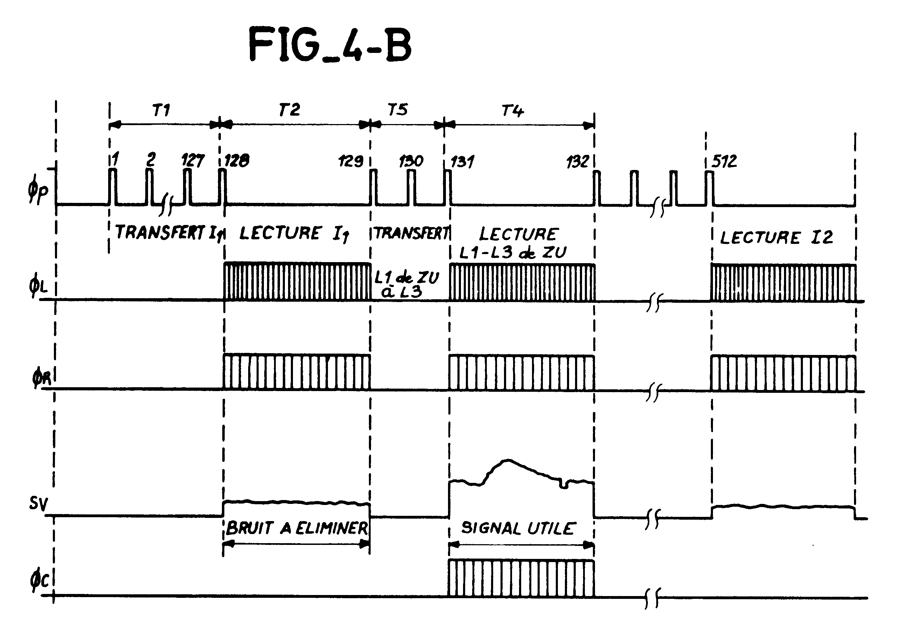

La figure 4A représente les signaux principaux composés des phases de commande. Le capteur termine d'un côté par un registre de lecture non figuré dans lequel on transfert en parallèle les lignes. Ce registre est lu au moyen de la phase de commande $\phi$L. Le registre de lecture est suivi, de manière connue, d'un étage de sortie qui comporte une entrée de commande de remise à zéro qui reçoit la phase de commande $\phi$R correspondante. La phase de commande $\phi$P correspond au signaux de transfert lignes de la zone image dans le registre de lecture du capteur. Un premier intervalle de temps TI1 correspond à la lecture du premier intervalle I1. Cette lecture est effectuée de la manière suivante : les différentes lignes de cet intervalle I1 qui comporte, par exemple, 128 lignes (cas envisagé N = 512 et où le format sélectionné est celui de la figure 2A) sont transférées en parallèle de manière successive (durée T1) dans le registre de lecture à la cadence de transfert maximale autorisée par les signaux $\phi$P élaborés par le séquenceur. Le registre de lecture n'est pas rendu opérationnel avant la fin du transfert de la 128ème ligne. A ce moment, la phase de commande $\phi$L effectue le transfert en série (durée T2) vers l'étage de sortie des signaux intégrés correspondants dans le registre. L'élimination du bruit correspondant est effectué par remise à zéro $\phi$R qui peut être faite, par exemple, à la cadence moitié de la phase de commande $\phi$L.

Vient ensuite la durée TZU de lecture de la zone utile ZU, cette durée étant égale à n fois la durée de lecture d'une ligne en envisageant la lecture successive ligne par ligne de cette zone, comme représenté. Une première durée T3 correspond au transfert de la première ligne L1 de la zone utile cette ligne correspondant à la 129ème ligne de l'image, ensuite la durée T4 correspond à la lecture de cette ligne par lecture série point par point du registre, le signal utile est four par l'étage de sortie. Cette opération ce transfert et de lecture est renouvelée ensuite pour les lignes suivantes, 130, 131, etc... jusqu'à la 384ème et dernière ligne de la zone utile.

Vient ensuite une dernière phase TI2 analogue à la phase TI1 concernant les lignes 385 à 512 représentant l'intervalle I2 qui est lue à vitesse maximale par transfert des 128 lignes qui le composent avant lecture en série du registre et élimination des signaux de bruit correspondants.

Cette méthode de lecture rapide pour le premier mode de fonctionnement permet de réduire au maximum la durée de lecture des deux intervalles inutiles I1 et I2 et de limiter ainsi la durée de lecture de l'image a une valeur voisine de celle nécessaire pour explorer la zone utile ZU.

La figure 4B représente une technique dérivée suivant laquelle au lieu de lire une seule ligne à la fois de la zone utile on et plusieurs lignes, par exemple trois lignes successives qui sont d'abord transférées et donc intégrées analogiquement dans le registre de lecture avant d'en extraire le signal vidéo utile par la commande $\phi$L. Dans ce concept le nombre de lecture de la zone utile est réduit dans le rapport 3, ce qui diminue encore la durée de lecture de l'image et donc accroît la cadence. Cependant avec cette manière de procéder on perd sur la résolution étant donné qu'on accumule trois points verticalement correspondant à trois lignes successives. La durée T5 correspondant au transfert successif des trois lignes est supérieure à la durée T3 précédente. Par contre la durée de lecture de ces trois lignes reste égale à la valeur T4 ou à la valeur T2 précédente nécessaire pour lire les M étages successifs du registre.

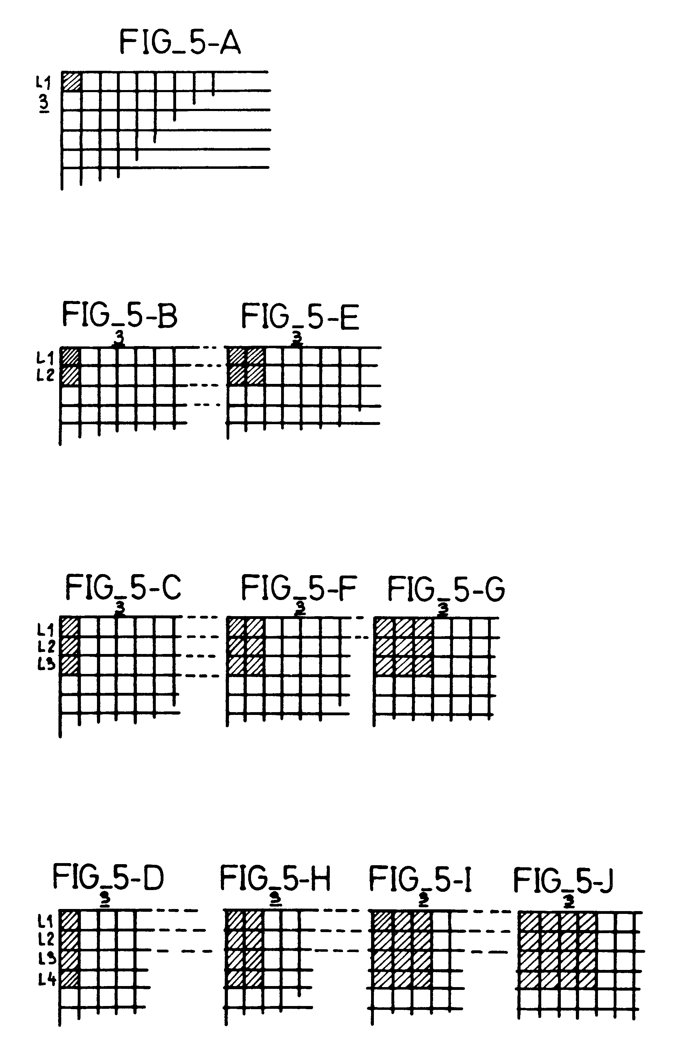

Les schémas figure 5 se rapportent au deuxième mode de fonctionnement suivant lequel le format est le format global de l'image et l'on joue sur la résolution. La figure 5A se rapporte au mode conventionnel où la lecture s'effectue point par point. Le mode 2 proprement dit est représenté par les figures suivantes 5B à 5J où l'on fait varier la résolution. Par exemple, en 5B, la résolution est moitié, on considère 2 pixels successifs correspondant à deux lignes successives;dans le cas 5C, 3 pixels sur 3 lignes successives; dans le cas 5D, 4 pixels sur 5 lignes successives, etc.... La lecture correspondante s'effectue dans le cas 5B après transfert de paquets de deux lignes successives à la fois, dans le cas 5C trois lignes à la fois et dans le cas 5D quatre lignes à la fois, dans le registre de lecture du capteur. Chaque cellule du registre de sortie reçoit ainsi la somme des charges des 2,3,4 pixels correspondant à des pixels de même rang sur les 2, 3 ou 4 lignes transférées. Vient ensuite une période de lecture T4 de ces charges transférées moyennant application des phases de commande $\phi$L qui font déplacer les charges vers l'étage de sortie. Le signal de remise à zéro est appliqué à la cadence du signal $\phi$L dans les cas 5B, 5C, 5D. Dans les versions 5E, 5F et 5H on intègre également les charges horizontalement ceci est rendu possible en effectuant la lecture du registre et en appliquant le signal de remise à zéro $\phi$R à la cadence de deux période $\phi$L dans le cas des figures 5E, 5F et 5H, toutes les trois périodes $\phi$L cas des figures 5G et 5I, et toutes les quatre périodes $\phi$L cas de la figure 5J. On obtient ainsi en sortie un signal intégré sur deux pixels successifs, ou trois, ou quatre, ou plus selon le cas. Il y a lieu de noter que cette intégration en sortie ne permet pas de gagner du temps sur la cadence de lecture. Le temps gagné est celui résultant du nombre K de lignes transférées à chaque fois, par exemple dans le cas 5C la cadence de lecture peut être multipliée par trois.

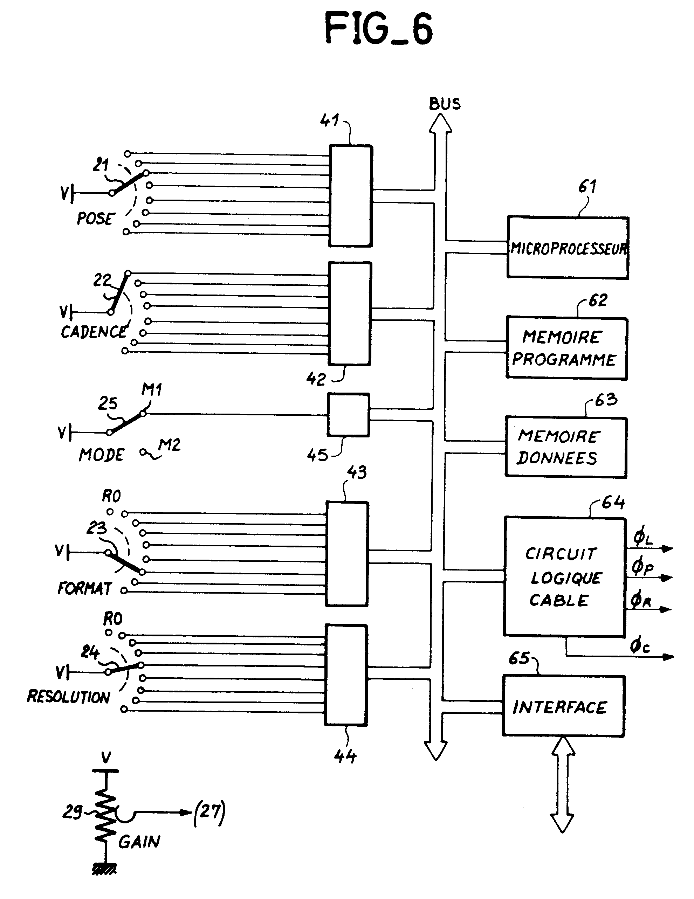

La figure 6 représente un schéma d'un mode de réalisation possible de l'ensemble des commandes opérationnelles 30 et du séquenceur 6. Les commandes comportent des commutateurs ou sélecteurs 21 à 25 connectés par l'intermédiaire de circuits de connexion 44 à 45 aux circuits bus du séquenceur qui comporte un microprocesseur 61, une mémoire programme 62 ou mémoire morte, une mémoire de données 63 ou mémoire vive, un circuit logique câblé 64 qui comporte une horloge pour produire à partir des données reçues les phases de commande $\phi L$, $\phi P$, $\phi R$ et $\phi C$, et le circuit d'interface 65. Chacun des commutateurs 21 à 24 est représenté par un système à huit fils pour produire un mot de 8 bits. La tension V permet d'appliquer un potentiel sur le fil de la position correspondante du commutateur et cette position représente un "1" alors que l'absence de tension sur les autres fils correspond à un "0". On a ainsi un mot de 8 bits composé de sept valeurs zéro et d'une valeur "1". Dans le cas de la commutation du format ou de la résolution une neuvième position $R_o$ est prévue pour le commutateur suivant laquelle les huit fils forment un mot suivi de huit valeurs zéro. Cette neuvième position correspond au fonctionnement conventionnel c'est-à-dire format total de l'image et résolution optimale par lecture de tous les pixels. Les possibilités offertes pour le format et la résolution sont de huit valeurs possibles avec le montage proposé. En ce qui concerne le mode on a considéré deux modes de fonctionnement le mode 1 et le mode 2 et le commutateur peut être réduit comme représenté à un commutateur à deux positions avec un fil de sortie qui présente la valeur "1" ou "0", selon le mode choisi. Le réglage complémentaire de gain est un réglage continu analogique à l'aide d'un potentiomètre 24 par prélèvement de la tension curseur qui est transmise au circuit d'alimentation 27 sous forme d'un signal analogique. Le microprocesseur 61 effectue, en fonction des indications affichées par les commutateurs, programmation de lecture correspondante et élabore les phases de commandes du capteur. En particulier, le microprocesseur ne tient pas compte de l'indication du commutateur 24 lorsque le mode 1 (position M1) de fonctionnement est choisi, et si ce commutateur 24 est sur une position autre que la position $R_o$. De même, le microprocesseur ne tient pas compte de l'indication du sélecteur de format 23 lorsque le mode 2 (position M2) est choisi sauf si le commutateur 23 se trouve sur la position $R_o$. Dans le même concept, pour avoir une correspondance entre la cadence d'image sélectionnée compatible avec le choix du format ou de la résolution, le microprocesseur ne tient compte de valeur affichée pour le format en mode 1 et pour la résolution en mode 2 que si ce format ou cette résolution impose une cadence qui ne dépasse pas celle affichée par le commutateur 22 etqui correspond à une cadence maximale sélectionnée pour l'opération d'enregistrement en cours.

La lecture rapide utilisée utilise la faculté d'intégration analogique par sommation des charges de plusieurs lignes ou de plusieurs points charges reçues par chaque photosite du capteur qui est stockée sous forme d'électrons dans la capacité MOS correspondante. Ainsi, il est possible d'intégrer analogiquement les charges accumulées par les pels de même rang de plusieurs lignes, par exemple trois, il suffit de commander le transfert des trois lignes successives correspondantes dans le registre de lecture par trois phases $\phi P$ sans commander la sortie série du contenu du registre par les phases $\phi L$, cette commande n'étant effectuée qu'à la fin du transfert. A l'issu des trois phases $\phi P$, chaque étage du registre contient ainsi l'intégrale des charges correspondant au photosite de même rang des trois lignes. Il en est de même pour l'intégration analogique des points sur une ligne ; la conversion des charges en tension est réalisée dans le circuit de sortie à l'aide d'une diode flottante qui doit être mises à niveau entre chaque paquet de charge représentant la quantité de lumière reçue par chaque photo site de façon à obtenir l'information liée à chaque point élémentaire. Si cette remise à niveau n'est effectuée que tous les n points, trois par exemple, l'information présentée en sortie avant cette commande est proportionnelle à la somme des charge dans l'ensemble des n pels correspondants. La technique d'élimination des lignes inutiles, c'est-à-dire ne contenant aucun information que l'on désire préserver, par transferts successifs des lignes correspondantes avant lecture finale et élimination du signal correspondant, est évidemment bien plus rapide du fait qu'il n'y a qu'une seule lecture série. S'il y a un nombre R de lignes contigües inutiles à éliminer de M points, le gain de temps est celui réalisé pour la lecture de R-1 lignes de M points.

A titre d'exemple si l'on considère un capteur DTC du type THX 31150 fabriqué par Thomson-CSF qui comporte 512 lignes de 500 points et une fréquence maximale de lecture de 15MHz (fréquence maximale des phases de commande) soit une période d'environ 66ns. Le temps nécessaire pour la lecture de la matrice complète, en utilisation classique, est sans compter le temps d'intégration de 17ms. Avec un temps d'intégration minimale de l'ordre de $100\mu s$ la cadence maximale image est de l'ordre de 58 images/s. En considérant le mode 1 de fonctionnement suivant figure 2A cette cadence est doublée soit 116 images/s. Cette vitesse double est également atteinte avec le mode 2 de fonctionnement dans l'exemple figure 5B.

La figure 3A et 3B se rapporte à une variante du mode 1 de fonctionnement. Suivant cette figure, la zone utile est un format réduit de l'image totale mais qui cette fois ne couvre pas toute la largeur de l'image et peut par exemple en couvrir la moitié et représenter le quart du format global comme dans le cas de la figure 3A ou le huitième dans le cas de la figure 3B. La disposition dans le coin côté sortie registre de cette zone est avantageuse pour l'extraction rapide des données par le registre de lecture. La partie restante inutile du capteur doit être vidée de ses informations comme dans le cas des zones I1 et I2 du mode 1, ou dépourvue de charges en disposant un cache de forme correspondante sur le trajet optique, par exemple au niveau d'entrée de l'objectif 1.

Le capteur matriciel DTC 3 peut être un capteur conventionnel à transfert de trame du type utilisé en télévision pour une lecture ligne par ligne, ou un capteur de type particulier, par exemple, à interligne ou monocoup.

Comme représenté sur la figure 1, le système de prise de vues comporte un circuit d'anti-éblouissement 10 qui élabore à partir du signal vidéo en sortie de l'amplificateur 5 un signal appliqué au circuit d'alimentation 27, pour commander le gain de l'intensificateur 2. Certains capteurs DTC sont équipés de dispositifs internes anti-éblouissement qui sont essentiellement constitués de systèmes de drains électriques implantés entre les photosites et qui écoulent rapidement vers la masse les charges en surplus en cas d'éclairement supérieur à la saturation sur certains photosites. Sans ces dispositifs les charges en surplus viendraient polluer les pels avoisinants non saturés et rendrait inexploitable l'ensemble de l'image. Ces dispositifs permettent également de diminuer le temps de l'opération qui est le temps nécessaire au capteur pour fournir une image correcte après la suppression d'un éblouissement momentané. Le circuit d'anti-éblouissement 10 prévu est réalisé selon des techniques connues et permet d'obtenir une image utilisable même si l'éblouissement se maintient pendant une durée assez longue. Pour cela le circuit 10 placé en observation du signal vidéo détecte toute saturation affectant au moins les trois quart de l'image et vient agir par approximations successives sur le gain de l'intensificateur utilisé en obturateur. De ce fait on peut estimer qu'en moyenne seules quatre à cinq images sont perdues avant de retrouver une image exploitable.

## Revendications

1. Système de prise de vues en vidéographie rapide comprenant une caméra équipée d'un dispositif obturateur (2, 20, 21, 22) commandé périodiquement à l'ouverture et d'un capteur matriciel solide composé d'une matrice (3) de M lignes et M colonnes, et de moyens de lecture (4) de cette matrice commandée par un séquenceur programmable (6), le système étant caractérisé en ce que le dispositif obturateur comporte un obturateur (2) à commande électrique et des moyens de commande (20, 21, 22) de l'obturateur permettant de faire varier d'une part, la durée d'ouverture (TP), c'est-à-dire le temps de pose et, d'autre part, la période d'obturation (TR), c'est-à-dire la cadence image, ces deux paramètres pouvant varier indépendamment l'un de l'autre et en ce qu'il comporte un sélecteur de mode (25), un sélecteur de format (23) et un sélecteur de résolution (24) connectés au séquenceur (6), le sélecteur de mode (25) fournissant au séquenceur un mode de fonctionnement parmi au moins deux modes, un premier mode à format réglable et résolution constante dans lequel le sélecteur de format (23) fournit au séquenceur un nombre entier K, le séquenceur (6) commandant alors la lecture de N/K lignes de la matrice et un deuxième mode à format constant et résolution réglable dans lequel le sélecteur de résolution (24) fournit au séquenceur un nombre entier K, le séquenceur commandant alors la lecture groupée de K lignes successives, l'un et l'autre des deux modes permettant de diviser le temps de lecture de la matrice par K et d'augmenter la cadence image (TR) d'un facteur au plus égal à K.

2. Système selon la revendication 1, caractérisé en ce que, dans le premier mode de fonctionnement, la résolution est maximale et, dans le deuxième mode de fonctionnement, le format est maximal.

3. Système selon la revendication 1 ou 2, caractérisé en ce que lesdits moyens de commande (20, 21, 22) comportent un circuit de commande obturateur (20), un sélecteur de réglage du temps de pose (21) et un sélecteur de réglage de la cadence image (22), les données affichées de temps de pose et de cadence image étant transmises au circuit de commande obturateur (20) à travers le séquenceur programmable (6).

4. Système selon l'une quelconque des revendications précédentes, caractérisé en ce que le dispositif obturateur (2) est du type intensificateur d'image à gain réglable, les moyens de commande d'obturation comportant en outre un circuit d'alimentation (27) de l'intensification et un sélecteur de réglage de gain (29) pour modifier la tension d'alimentation.

5. Système selon la revendication 4, caractérisé en ce que l'intensificateur d'image (2) comporte une galette de microcanaux (15) associée à une photocathode en arseniure de gallium (17).

6. Système selon l'une quelconque des revendications 4 et 5, caractérisé en ce qu'il comporte un circuit anti-éblouissement (10) qui élabore, à partir du signal vidéo, un signal de commande appliquée audit circuit d'alimentation (27) et qui modifie le gain de l'intensificateur (2) pour maintenir le fonctionnement de la caméra en cas d'éblouissement de la scène observée.

7. Système selon l'une quelconque des revendications précédentes, caractérisé en ce que lesdits réglages, excepté la commande de gain (29) sont appliqués au séquenceur programmable (6) qui élabore le signal périodique de commande d'obturation correspondant et les signaux de lecture ou phases de commande correspondantes.

8. Système selon la revendication 7, caractérisé en ce que lesdits réglages (21, 22, 23, 24, 25, 29 et 30) sont produits localement (30) et transmis au séquenceur programmable (6) excepté la commande de gain (29) qui est transmise directement au circuit d'alimentation (27).

9. Système selon l'une quelconque des revendications précédentes, caractérisé en ce que le capteur utilisé est un capteur matriciel conventionnel à transfert de charges du type à transfert de trame, ou interligne, ou monocoup.

10. Système selon l'une quelconque des revendications précédentes, caractérisé en ce que, pour le premier mode de fonctionnement, la lecture de la zone utile (ZU) s'effectue en transférant les lignes de cette zone une par une.

11. Système selon l'une quelconque des revendications 1 à 9, caractérisé en ce que, pour le premier mode de fonctionnement, la lecture de la zone utile (ZU) s'effectue en transférant les lignes de cette zone par paquets successifs comportant un nombre déterminé (K) de lignes dans le registre du capteur.

12. Système selon l'une quelconque des revendications 1 à 9, caractérisé en ce que, pour le deuxième mode de fonctionnement, la lecture s'effectue en transférant les lignes par paquets comportant au moins deux lignes avant lecture du registre de sortie du capteur.

13. Système selon la revendication 12, caractérisé en ce que la lecture du registre de la matrice s'effectue en lisant plusieurs points successifs qui sont intégrés dans l'étage de sortie.

14. Système selon l'une quelconque des revendications précédentes, caractérisé en ce que les réglages sont obtenus avec des sélecteurs à huit positions pour produire un mot de 8 bits, pour le réglage de la pose, de la cadence, du format et de la résolution, par un sélecteur à deux positions pour le réglage de mode, et par un potentiomètre pour le réglage du gain.

15. Système selon la revendication 14, caractérisé en ce que les réglages du format et de la résolution comportent une neuvième position (Ro) non connectée au séquenceur pour produire le format global et la résolution maximale d'une exploitation conventionnelle.

## Claims

1. A system for high speed videographic viewing comprising a camera fitted with a shutter device (2, 20, 21 and 22) operated periodically upon opening and a solid state matrix sensor composed of a matrix (3) of N lines and M columns and of read means (4) for the matrix controlled by a programmable sequencer (6), said system being characterized in that the shutter device comprises a shutter (2) with an electrical control and shutter control means (20, 21 and 22) rendering possible a variation on the one hand in the duration of opening (TP) of the shutter, that is to say the exposure time and on the other hand the period of shutting (TR), that is to say the frame rate, said two parameters being able to vary independently of each other and in that it comprises a mode selector (25), a format selector (23) and a resolution selector (24) all connected with the sequencer (6), the mode selector (25) supplying the sequencer with one mode of at least two modes, a first mode with a variable format and a constant resolution in which the format selector (23) supplies the sequencer with a whole number K, the sequencer (6) then causing the reading of N/K lines of the matrix and a second mode with a constant format and a variable resolution in which the resolution selector (24) supplies the sequencer with a whole number K, the sequencer then causing the grouped reading of K successive lines, both the two modes rendering possible a division of the read time of the matrix by K and an increase of the frame rate (TR) by a factor equal to K at the most.

2. The system as claimed in claim 1, characterized in that, in the first mode of the operation, the resolution is maximum and, in the second mode of operation, the format is maximum.

3. The system as claimed in claim 1 or claim 2, characterized in that the said control means (20, 21 and 22) comprises a shutter control circuit (20), a selector for regulation of the exposure time (21) and a selector for regulation of the frame rate (22), the displayed data for exposure time and frame rate being transmitted to the shutter control circuit (20) via the programmable sequencer (6).

4. The system as claimed in any one of the preceding claims, characterized in that the shutter device (2) is of the image intensifying type having a variable gain, the shutter control means comprising furthermore a power supply circuit (27) for intensification and a selector for the regulation of the gain (29) in order to modify the supply voltage.

5. The system as claimed in claim 4, characterized in that the image intensifier (2) comprises a pad of microchannels (15) associated with a photocathode (17) of gallium arsenide.

6. The system as claimed in claim 4 or in claim 5, characterized in that it comprises an antidazzle circuit (10) which from the video signal produces a control signal applied to the said power supply circuit (27) and which modifies the gain of the intensifier (2) in order to maintain operation of the camera in the case of dazzle from the observed scene.

7. The system as claimed in any one of the preceding claims, characterized in that such regulation, but for the gain control one (29), affects the programmable sequencer (6) which processes the corresponding periodic shutter control signal and the corresponding read or phase control signals.

8. The system as claimed in claim 7, characterized in that such regulation (21, 22, 23, 24, 25, 29 and 30) is produced locally (30) and transmitted to the programmable sequence (6) but for the gain command (29) which is transmitted directly to the power supply circuit (27).

9. The system as claimed in any one of the preceding claims, characterized in that the sensor utilized is a conventional charge transfer matrix sensor of the screen transfer type, the interline type, or the single shot type.

10. The system as claimed in any one of the preceding claims, characterized in that, for the first mode of operation, the reading of the working zone (ZU) is performed by transfer of the lines of this zone one by one.

11. The system as claimed in any one of the preceding claims 1 through 9, characterized in that, for the first mode of operation, the reading of the working zone (ZU) is performed by transferring the lines of this zone in successive packages comprising a predetermined number (K) of lines in the register of the sensor.

12. The system as claimed in any one of the preceding claims 1 through 9, characterized in that, for the second mode of operation, reading is performed by transfer of the lines in packages comprising at least two lines prior to reading of the output register of the sensor.

13. The system as claimed in claim 12, characterized in that the reading of the matrix is performed by reading several successive dots which are integrated in the output stage.

14. The system as claimed in any one of the preceding claims, characterized in that such regulation is performed with selectors having eight positions in order to produce a word of 8 bits for the regulation of the exposure, of the rate, of the format and of the resolution, using a selector having eight positions for the regulation of the mode, and using a potentiometer for regulation of gain.

15. The system as claimed in claim 14, characterized in that the regulation of the format and of the resolution comprises a ninth position (Ro) which is not connected with the sequencer in order to produce the global format and the maximum resolution of conventional operation.

**Patentansprüche**

1. Aufnahmesystem für schnelle Videographie, mit einer Kamera, die mit einer Verschlußeinrichtung (2, 20, 21, 22), deren Öffnung periodisch gesteuert wird, und einem matrixförmigen Festkörper-Meßwertaufnehmer, der aus einer Matrix (3) mit N Zeilen und M Spalten aufgebaut ist, ausgerüstet ist, und Lesemitteln (4) für diese Matrix, die durch eine programmierbare Ablaufsteuerschaltung (6) gesteuert werden, wobei das System dadurch gekennzeichnet ist, daß die Verschlußeinrichtung einen elektrisch gesteuerten Verschluß (2) und Verschluß-Steuermittel (20, 21, 22) aufweist, die die Veränderung einerseits der Öffnungsdauer (TP), d.h. der Belichtungsdauer, und andererseits der Verschlußperiode (TR), d.h. der Bildfolge, ermöglichen, wobei diese zwei Parameter unabhängig voneinander geändert werden können, und daß es eine Betriebsart-Wähleinrichtung (25), eine Format-Wähleinrichtung (23) und eine Auflösungs-Wähleinrichtung (24) aufweist, die mit der Ablaufsteuerschaltung (6) verbunden sind, wobei die Betriebsart-Wähleinrichtung (25) an die Ablaufsteuerschaltung eine Betriebsart von wenigstens zwei Betriebsarten liefert, einer ersten Betriebsart mit einstellbarem Format und konstanter Auflösung, in der die Format-Wähleinrichtung (23) an die Ablaufsteuerschaltung eine ganze Zahl K liefert und die Ablaufsteuerschaltung (6) dann den Lesevorgang N/K Zeilen der Matrix steuert, und einer zweiten Betriebsart mit konstantem Format und einstellbarer Auflösung, in der die Auflösungs- Wähleinrichtung (24) an die Ablaufsteuerschaltung eine ganze Zahl K liefert und die Ablaufsteuerschaltung dann den zu K aufeinanderfolgenden Zeilen zusammengefaßten Lesevorgang steuert, wobei sowohl die eine als auch die andere der zwei Betriebsarten die Division der Lesedauer der Matrix durch K und die Erhöhung der Bildfolge (TR) um einen Faktor, der höchstens gleich K ist, ermöglichen.

2. System gemäß Anspruch 1, dadurch gekennzeichnet, daß in der ersten Betriebsart die Auflösung maximal ist und in der zweiten Betriebsart das Format maximal ist.

3. System gemäß Anspruch 1 oder 2, dadurch gekennzeichnet, daß die Steuermittel (20, 21, 22) eine Verschluß-Steuerschaltung (20), eine Wähleinrichtung für die Einstellung der Belichtungsdauer (21) und eine Wähleinrichtung für die Einstellung der Bildfolge (22) umfassen, wobei die angezeigten Daten der Belichtungsdauer und der Bildfolge über die programmierbare Ablaufsteuerschaltung (6) an die Verschluß-Steuerschaltung übertragen werden.

4. System gemäß einem der vorangehenden Ansprüche, dadurch gekennzeichnet, daß die Verschlußeinrichtung (2) vom Typ einer Bildverstärkungseinrichtung mit einstellbarer Verstärkung ist, wobei die Verschluß-Steuermittel außerdem eine Verstärkungs-Versorgungsschaltung (27) und eine der Veränderung der Versorgungsspannung dienende Wähleinrichtung für die Einstellung der Verstärkung (29) umfassen.

5. System gemäß Anspruch 4, dadurch gekennzeichnet, daß die Bildverstärkungseinrichtung (2) eine Mikrokanalplatte (15) aufweist, die mit einer Galliumarsenid-Photokathode (17) verbunden ist.

6. System gemäß einem der Ansprüche 4 und 5, dadurch gekennzeichnet, daß sie eine Antiblendwirkungsschaltung (10) umfaßt, die anhand des Videosignals ein Steuersignal erzeugt, das in die Versorgungsschaltung (27) eingegeben wird und das die Verstärkung der Verstärkungseinrichtung (2) verändert, um den Betrieb der Kamera im Falle einer Blendwirkung der beobachteten Szene aufrecht zu erhalten.

7. System gemäß einem der vorangehenden Ansprüche, dadurch gekennzeichnet, daß die erwähnten Einstellungen mit Ausnahme der Steuerung der Verstärkung (29) in die programmierbare Ablaufsteuerschaltung (6) eingegeben werden, die das entsprechende periodische Verschluß-Steuersignal und die Lesesignale oder die entsprechenden Steuerungsphasen entwickelt.

8. System gemäß Anspruch 7, dadurch gekennzeichnet, daß die erwähnten Einstellungen (21, 22, 23, 24, 25, 29 und 30) lokal erzeugt werden (30) und mit Ausnahme der Steuerung der Verstärkung (29), die direkt an die Versorgungsschaltung (27) übertragen wird, an die programmierbare Ablaufsteuerungsschaltung (6) übertragen werden.

9. System gemäß einem der vorangehenden Ansprüche, dadurch gekennzeichnet, daß der verwendete Meßwertaufnehmer ein herkömmlicher ladungsgekoppelter, matrixförmiger Meßwertaufnehmer vom Einzelbild-, Zeilen- oder Einzelpunkt-Übertragungstyp ist.

10. System gemäß einem der vorangehenden Ansprüche, dadurch gekennzeichnet, daß in der ersten Betriebsart das Lesen des nutzbaren Bereichs (ZU) durch die nacheinander erfolgende Übertragung der Zeilen dieses Bereichs ausgeführt wird.

11. System gemäß einem der Ansprüche 1 bis 9, dadurch gekennzeichnet, daß in der ersten Betriebsart das Lesen des nutzbaren Bereichs (ZU) durch die Übertragung der Zeilen dieses Bereichs in aufeinanderfolgenden Paketen, mit einer bestimmten Anzahl (K) von Zeilen im Register des Meßwertaufnehmers, ausgeführt wird.

12. System gemäß einem der Ansprüche 1 bis 9, dadurch gekennzeichnet, daß in der zweiten Betriebsart das Lesen durch die Übertragung der Zeilen der einzelnen, wenigstens zwei Zeilen enthaltenden Pakete vor dem Lesen des Ausgangsregisters des Meßwertaufnehmers ausgeführt wird.

13. System gemäß Anspruch 12, dadurch gekennzeichnet, daß das Lesen des Registers der Matrix durch das Lesen einer Mehrzahl von aufeinanderfolgenden Punkten, die in der Ausgangsstufe integriert sind, ausgeführt wird.

14. System gemäß einem der vorangehenden Ansprüche, dadurch gekennzeichnet, daß die Einstellungen mittels Wähleinrichtungen mit acht Positionen für die Erzeugung eines 8-Bit-Wortes für die Einstellung der Belichtungsdauer, der Bildfolge, des Formates und der Auflösung, mittels einer Wähleinrichtung mit zwei Positionen für die Einstellung der Betriebsart und mit einem Potentiometer für die Einstellung der Verstärkung erhalten werden.

15. System gemäß Anspruch 14, dadurch gekennzeichnet, daß die Einstellungen des Formates und der Auflösung eine neunte Position (Ro) enthalten, die nicht mit der Ablaufsteuerschaltung verbunden ist, um das globale Format und die maximale Auflösung eines herkömmlichen Betriebs zu erzeugen.

**FIG_1**

# FIG_2-A

# FIG_2-B

# FIG_3-A

# FIG_2-C

# FIG_3-B

# FIG_4-A

TRANSFERT L1 DE ZU

$T_{I1}$      $TZU = n(T3+T4)$      $TI2$

$T1$   $T2$   $T3$   $T4$

1   2   127   128      129      130   384      385      512

$\phi P$    $Tp$

TRANSFERT $I_1$   LECTURE $I_1$    LECTURE $L_1$ de ZU    LECTURE $L_n$ de ZU    TRANSFERT I2   LECTURE I2

$\phi_L$

$\phi_R$

$SV$

BRUIT A ELIMINER    SIGNAL UTILE

$\phi_d$

EP 0 265 302 B1

# FIG_4-B

EP 0 265 302 B1

# FIG_5-A

# FIG_5-B

# FIG_5-E

# FIG_5-C

# FIG_5-F

# FIG_5-G

# FIG_5-D

# FIG_5-H

# FIG_5-I

# FIG_5-J

# FIG_6